# EUROPÄISCHE PATENTSCHRIFT

(11) **EP 3 810 943 B1**
(45) Veröffentlichungstag und Bekanntmachung des Hinweises auf die Patenterteilung: **07.08.2024**
(21) Anmeldenummer: 19732535.0
(22) Anmeldetag: 12.06.2019
(51) Int. Cl.: F16C 19/06, F16C 33/78, F16C 35/077, F16J 15/3232, F16J 15/3236

(54) **WÄLZLAGER UND DICHTUNGSANORDNUNG MIT MINDESTENS ZWEI DICHTLIPPEN**
ROLLING BEARING AND SEAL HAVING AT LEAST TWO SEALING LIPS
PALIER À ROULEMENT ET SYSTÈME D'ÉTANCHÉITÉ COMPRENANT AU MOINS DEUX LÈVRES D'ÉTANCHÉITÉ

(30) Priorität: 19.06.2018 DE 102018114677
(43) Veröffentlichungstag der Anmeldung: 28.04.2021
(73) Patentinhaber: Schaeffler Technologies AG & Co. KG, 91074 Herzogenaurach (DE)
(72) Erfinder: TAMURA, Yasumasa, 242-0011 Yamato (JP)
(86) Internationale Anmeldenummer: PCT/DE2019/100540
(87) Internationale Veröffentlichungsnummer: WO 2019/242810

(56) Entgegenhaltungen:
- CN-A- 108 019 519
- JP-A- H08 232 967

## Beschreibung

Die Erfindung betrifft ein Wälzlager mit einem Außenring und einem gegenüber diesem um eine Achse rotierbaren Innenring, wobei zwischen dem Außenring und dem Innenring ein Lagerinnenraum mit hierin angeordneten Wälzkörpern ausgebildet ist, welcher Lagerinnenraum durch eine Dichtungsanordnung abgedichtet ist, umfassend einen am Außenring angebrachten Dichtungsring, welcher eine erste elastische Dichtlippe und eine zweite elastische Dichtlippe umfasst, wobei die erste Dichtlippe in einer Nominalstellung der Dichtungsanordnung an einem zylindermantelförmigen Oberflächenabschnitt des Innenrings anliegt, wobei die zweite Dichtlippe in der Nominalstellung der Dichtungsanordnung an einem sich zumindest teilweise in radialer Richtung erstreckenden umlaufenden Oberflächenabschnitt des Innenrings anliegt und wobei die zweite Dichtlippe in axialer Richtung zwischen dem sich zumindest teilweise in der radialen Richtung erstreckenden umlaufenden Oberflächenabschnitt des Innenrings und dem zylindermantelförmigen Oberflächenabschnitt des Innenrings angeordnet ist.

Als nächstkommend wir die JP H08 232967 A betrachtet. Diese zeigt ein Wälzlager mit einer Dichtungsanordnung, von dessen Außenring ein Dichtungsring der Dichtungsanordnung sich radial auf den Innenring zu erstreckt. Der Dichtungsring ist innenseitig zweilippig ausgeführt. Eine erste Dichtlippe kragt hierfür auf einen inneren Oberflächenabschnitt des Innenrings. Eine zweite Dichtlippe liegt an einem Außenbord einer Ringnut im Innenring an. Die vorgenannte Dichtungsanordnung soll insbesondere bei Stillstand oder geringer Drehzahl des Wälzlagers ein Auslaufen von Schmiermittel aus diesem verhindern, wohingegen mit höherer Drehzahl die erste Dichtlippe kontaktlos gegenüber dem Innenring zur Reibungsverringerung vorliegen soll.

Die EP 3 112 711 A1 zeigt ein Wälzlager mit einer Dichtung, bei welcher eine Dichtlippe einen Gleitkontakt mit einem Schleuderring ausbildet. Die Dichtlippe soll mit einem konstanten Kontaktdruck auf den Schleuderring gepresst werden, ohne dass die aufgrund der Drehung des Wälzlagers entstehende Zentrifugalkraft zu einer Veränderung des Kontaktdruckes führt. Das Wälzlager umfasst ein ringförmiges Dichtungselement, welches an einem axialen Endabschnitt einer Innenumfangsfläche eines rotierbaren Außenringes des Wälzlagers befestigt ist. Der Schleuderring ist an einem axialen Endabschnitt einer äußeren Umfangsfläche eines feststehenden Innenringes des Wälzlagers befestigt. Das Dichtungselement weist die Dichtungslippe auf, die in Gleitkontakt mit dem Schleuderring steht. Die Dichtungslippe kann sich elastisch verformen, um sich aufgrund der Zentrifugalkraft radial nach außen zu drehen. Der Schleuderring ist so ausgebildet, dass er entsprechend dem Bewegungsweg eines Endabschnittes der Dichtungslippe gekrümmt ist. Dreht sich der Außenring, wirkt eine Zentrifugalkraft auf die Dichtungslippe, sodass sich diese verformt und der Endabschnitt auf seinem Bewegungsweg bewegt wird. Da der Schleuderring entsprechend dem Bewegungsweg gekrümmt ist, bleibt der Kontaktdruck zwischen dem Endabschnitt der Dichtungslippe und dem Schleuderring konstant.

Die JP H05-272543 A lehrt eine Kontaktdichtung für ein Wälzlager, welche eine geringe Reibung, eine hohe Abriebfestigkeit und eine gute Wärmebeständigkeit aufweisen soll. Die Kontaktdichtung besteht aus einer Schmierkautschukzusammensetzung, welche ein thermoplastisches Fluorharz, ein Fluorkautschuk und ein niedermolekulares fluorhaltiges Polymer als Bestandteile umfasst. Die Kontaktdichtung weist in einer Ausführungsform eine Dichtlippe auf, die in einer ringförmigen Ausnehmung im gegenüberliegenden Wälzlagering sitzt. Die Kontaktdichtung weist in einer weiteren Ausführungsform zwei Dichtlippen auf, welche den gegenüberliegenden Wälzlagering kontaktieren.

Aus der CN 108 019 519 A ist eine wasserdichte Dichtung für Lager mit einer ersten äußeren Lippe und einer zweiten äußeren Lippe am Außenrand eines Dichtungsrings und einer ersten inneren Lippe und einer zweiten inneren Lippe am Innenrand des Dichtungsrings bekannt. Zwischen der ersten inneren Lippe und der zweiten inneren Lippe ist eine Nut und zwischen der zweiten inneren Lippe und einer dritten inneren Lippe eine weitere Nut gebildet. Eine vierte innere Lippe ist in axialer Richtung des Dichtungsrings gerichtet.

Aufgabe ist es, ein Wälzlager mit einer Dichtungsanordnung zu schaffen, welche eine besonders sichere Abdichtung des Lagerinnenraums gewährleistet; dies auch bei einer axialen Verschiebung der Ringe des Wälzlagers zueinander.

Erfindungsgemäß wird diese Aufgabe dadurch gelöst, dass der Dichtungsring eine dritte Dichtlippe umfasst, die in der axialen Richtung außen vor der zweiten Dichtlippe angeordnet ist, wobei zwischen der dritten Dichtlippe und einem umlaufenden Oberflächenabschnitt des Innenrings ein Dichtspalt ausgebildet ist. Dabei ist an einem Hauptabschnitt des Dichtungsrings die dritte Dichtlippe angeschlossen und am inneren Umfang des Hauptabschnitts ein umlaufender Dichtlippenträger elastisch angeschlossen, der die erste Dichtlippe und die zweite Dichtlippe trägt.

Die erfindungsgemäße Dichtungsanordnung dient der Abdichtung des Wälzlagers. Innen- und Außenring des Wälzlagers sind bevorzugt koaxial zueinander angeordnet. Durch die genannte Achse sind eine axiale Richtung, eine radiale Richtung und eine tangentiale bzw. umfängliche Richtung definiert. Zwischen den beiden Wälzlagerringen ist ein Innenraum ausgebildet, welcher durch die Dichtungsanordnung abgedichtet wird. Die Dichtungsanordnung ist axial neben dem abzudichtenden Innenraum angeordnet, wodurch eine axiale Richtung nach außen vom Innenraum weg und eine axiale Richtung nach innen hin zum Innenraum definiert sind.

Die Dichtungsanordnung umfasst einen am Außenring angebrachten Dichtungsring. Dieser ist fest und dicht am Außenring befestigt. Der Dichtungsring besteht bevorzugt zumindest teilweise aus einem Elastomer. Der Dichtungsring umfasst eine erste elastische Dichtlippe, eine zweite elastische Dichtlippe und eine dritte elastische Dichtlippe. Die erste elastische Dichtlippe und die zweite elastische Dichtlippe sind axial nebeneinander angeordnet. Die erste Dichtlippe ist in Bezug auf die zweite Dichtlippe axial innen angeordnet. Entsprechend ist die zweite Dichtlippe in Bezug auf die erste Dichtlippe axial außen angeordnet.

In einer Nominalstellung der Dichtungsanordnung weisen die beiden Wälzlagerringe keine axiale Verschiebung zueinander auf. Entsprechend ist auch der Dichtungsring mit den Dichtlippen gegenüber dem Innenring nicht in der axialen Richtung verschoben. In der Nominalstellung sind die beiden Wälzlagerringe bevorzugt frei von mechanischen Belastungen; insbesondere frei von axial wirkenden Kräften.

Die erste Dichtlippe liegt zumindest in der Nominalstellung an einem zylindermantelförmigen Oberflächenabschnitt des Innenrings umlaufend an, sodass ein umlaufender Dichtkontakt ausgebildet ist. Die erste Dichtlippe kommt in der Nominalstellung insbesondere in der radialen Richtung zum Anliegen an dem zylindermantelförmigen Oberflächenabschnitt des Innenrings. Die zweite Dichtlippe liegt zumindest in der Nominalstellung an einem sich zumindest teilweise in der radialen Richtung erstreckenden umlaufenden Oberflächenabschnitt des Innenrings umlaufend an, sodass auch hier ein umlaufender Dichtkontakt ausgebildet ist. Die zweite Dichtlippe kommt in der Nominalstellung insbesondere in der axialen Richtung zum Anliegen an dem sich zumindest teilweise in der radialen Richtung erstreckenden umlaufenden Oberflächenabschnitt des Innenrings. Der sich zumindest teilweise in der radialen Richtung erstreckende umlaufende Oberflächenabschnitt ist bevorzugt rotationssymmetrisch in Bezug auf die Achse ausgebildet. Der sich zumindest teilweise in der radialen Richtung erstreckende umlaufende Oberflächenabschnitt erstreckt sich bevorzugt auch in die axiale Richtung, sodass er gegenüber der Achse geneigt ist. Die zweite Dichtlippe ist in der axialen Richtung zwischen dem sich zumindest teilweise in der radialen Richtung erstreckenden umlaufenden Oberflächenabschnitt des Innenrings und dem zylindermantelförmigen Oberflächenabschnitt des Innenrings angeordnet.

Die zur Erfindung gehörige dritte Dichtlippe des Dichtungsrings der Dichtungsanordnung ist in der axialen Richtung außen vor der zweiten Dichtlippe angeordnet. Die dritte Dichtlippe stellt bevorzugt die äußerste Dichtlippe der Dichtungsanordnung dar. Zwischen der dritten Dichtlippe und einem umlaufenden Oberflächenabschnitt des Innenrings ist ein Dichtspalt ausgebildet. Dieser ist bevorzugt in der radialen Richtung zwischen der dritten Dichtlippe und dem umlaufenden Oberflächenabschnitt des Innenrings ausgebildet. Der umlaufende Oberflächenabschnitt des Innenrings ist bevorzugt an einem in der axialen Richtung außen liegenden Ende des Innenrings angeordnet. Der umlaufende Oberflächenabschnitt des Innenrings weist bevorzugt einen zylindermantelförmigen Abschnitt auf. Der zwischen der dritten Dichtlippe und dem umlaufenden Oberflächenabschnitt des Innenrings ausgebildete Dichtspalt ist bevorzugt in der Nominalstellung, in der äußeren Verschiebestellung und auch in der inneren Verschiebestellung ausgebildet (s. nachfolgende Ausführungen), sodass die dritte Dichtlippe in keiner der Stellungen an dem umlaufenden Oberflächenabschnitt des Innenrings anliegt.

Ein besonderer Vorteil der erfindungsgemäßen Dichtungsanordnung besteht darin, dass auch im Falle einer axialen Beanspruchung der Wälzlagerringe, welche zu deren axialer Verschiebung zueinander führen kann, sodass die Nominalstellung verlassen wird, immer zumindest eine der beiden Dichtlippen (erste oder zweite Dichtlippe) am Innenring anliegt. Die Dichtungsanordnung verhindert so das Eindringen von Wasser, Feuchtigkeit und Schmutz in einem hohen Maße auch während axialer Beanspruchungen der Wälzlagerringe.

Die beiden Wälzlagerringe des Wälzlagers weisen in der Nominalstellung jeweils eine axiale Position auf, die durch die Nominalstellung definiert ist. Kommt es zu einer axialen Belastung, so wird die Nominalstellung verlassen. Eine äußere Verschiebestellung tritt aufgrund einer in der axialen Richtung nach außen auf den Innenring wirkenden Kraft ein, wodurch dieser gegenüber dem Außenring in der axialen Richtung nach außen verschoben ist. Entsprechend ist der Innenring auch gegenüber dem Dichtungsring in der axialen Richtung nach außen verschoben. Eine innere Verschiebestellung tritt aufgrund einer in der axialen Richtung nach innen auf den Innenring wirkenden Kraft ein, wodurch dieser gegenüber dem Außenring in der axialen Richtung nach innen verschoben ist. Entsprechend ist der Innenring auch gegenüber dem Dichtungsring in der axialen Richtung nach innen verschoben.

Die genannten axialen Kräfte können beispielsweise eine Komponente eines Drehmomentes sein, welches senkrecht zur Achse wirkt.

In der äußeren Verschiebestellung liegt die erste Dichtlippe an dem zylindermantelförmigen Oberflächenabschnitt des Innenrings an. Bei der axialen Verschiebung des Innenrings gleitet die erste Dichtlippe in axialer Richtung entlang des zylindermantelförmigen Oberflächenabschnitts, ohne dass es zu einer Verschiebung in die radiale Richtung kommt, sodass der umlaufende Dichtkontakt zwischen der ersten Dichtlippe und dem zylindermantelförmigen Oberflächenabschnitt des Innenrings erhalten bleibt. Hingegen ist zwischen der zweiten Dichtlippe und dem sich zumindest teilweise in radialer Richtung erstreckenden umlaufenden Oberflächenabschnitt des Innenrings ein Dichtspalt ausgebildet. Bei der axialen Verschiebung des Innenrings nach außen entfernt sich der sich zumindest teilweise in radialer Richtung erstreckende umlaufende Oberflächenabschnitt in der axialen Richtung von der zweiten Dichtlippe, wodurch der Dichtspalt ausgebildet wird.

In der inneren Verschiebestellung liegt die zweite Dichtlippe mit einer erhöhten Presskraft an dem sich zumindest teilweise in der radialen Richtung erstreckenden umlaufenden Oberflächenabschnitt des Innenrings an, da sie in der axialen Richtung hin zu dem sich zumindest teilweise in der radialen Richtung erstreckenden umlaufenden Oberflächenabschnitt des Innenrings verschoben ist. Dies führt zudem dazu, dass sich der Dichtungsring verformt und die erste Dichtlippe in radialer Richtung weg vom zylindermantelförmigen Oberflächenabschnitt des Innenrings verschoben wird. Hierdurch wird zwischen der ersten Dichtlippe und dem zylindermantelförmigen Oberflächenabschnitt des Innenrings ein Dichtspalt ausgebildet.

Sowohl in der äußeren Verschiebestellung als auch in der inneren Verschiebestellung liegt jeweils eine der beiden Dichtlippen am Innenring an und bildet einen Dichtkontakt aus.

Bei bevorzugten Ausführungsformen der erfindungsgemäßen Dichtungsanordnung besitzt der sich zumindest teilweise in radialer Richtung erstreckende umlaufende Oberflächenabschnitt des Innenrings die Form eines Kegelstumpfmantels. Die Kegelstumpfmantelform ist bevorzugt koaxial zur Achse. Ein Normalenvektor auf der Kegelstumpfmantelform weist eine axiale Richtungskomponente auf, die in der axialen Richtung nach innen zeigt.

Der kegelstumpfmantelförmige Oberflächenabschnitt des Innenrings ist bevorzugt durch eine umlaufende innere Seitenfläche einer Innenring ausgebildeten umlaufenden Nut bzw. Ausnehmung gebildet. Die umlaufende Nut ragt in der radialen Richtung bevorzugt zur Achse hin. Die umlaufende Nut weist in einer die Achse umfassenden Ebene bevorzugt einen trapezförmigen Querschnitt auf, der sich zur Achse hin verjüngt. Die umlaufende Nut ist in der axialen Richtung bevorzugt zwischen dem zylindermantelförmigen Oberflächenabschnitt und dem umlaufenden Oberflächenabschnitt angeordnet.

Die zweite Dichtlippe ist bevorzugt in der umlaufenden Nut angeordnet oder ragt zumindest in der radialen Richtung in die umlaufende Nut hinein. Somit bildet die zweite Dichtlippe eine Labyrinthdichtung aus, welche das Eindringen von Schmutz und Wasser nochmals erschwert.

Die zweite Dichtlippe weist bevorzugt die Form eines Hohlzylinders auf, um eine axiale Ausrichtung zum axialen Anliegen an dem sich zumindest teilweise in der radialen Richtung erstreckenden umlaufenden Oberflächenabschnitt des Innenrings zu ermöglichen. Die Hohlzylinderform ist bevorzugt koaxial zu der Achse ausgerichtet. Es kommt insbesondere ein axiale Ende der Hohlzylinderform zum Anliegen an dem sich zumindest teilweise in radialer Richtung erstreckenden umlaufenden Oberflächenabschnitt des Innenrings.

Bei bevorzugten Ausführungsformen der erfindungsgemäßen Dichtungsanordnung umfasst der Dichtungsring einen umlaufenden elastischen Dichtlippenträger, welcher die erste Dichtlippe und die zweite Dichtlippe gemeinsam trägt. Durch die gemeinsame Aufhängung der ersten Dichtlippe und der zweiten Dichtlippe am elastischen Dichtlippenträger ist gewährleistet, dass die erste Dichtlippe in der radialen Richtung weg vom zylindermantelförmigen Oberflächenabschnitt des Innenrings verschoben wird, wenn die zweite Dichtlippe stärker an den sich zumindest teilweise in der radialen Richtung erstreckenden umlaufenden Oberflächenabschnitt des Innenrings gepresst wird und dadurch der Dichtlippenträger des Dichtungsringes verformt wird, was in der inneren Verschiebestellung der Fall ist. Der Dichtlippenträger trägt bevorzugt nicht die dritte Dichtlippe, damit der Dichtspalt zwischen der dritten Dichtlippe und dem umlaufenden Oberflächenabschnitt des Innenrings beim Verlassen der Nominalstellung nicht beeinträchtigt wird.

Der elastische Dichtungslippenträger ist gegenüber einem Hauptabschnitt des Dichtungsringes bevorzugt axial nach innen verschoben angeordnet. Der Hauptabschnitt des Dichtungsringes ist bevorzugt kreisringscheibenförmig. Der Hauptabschnitt des Dichtungsringes trägt den Dichtungslippenträger und bevorzugt auch die dritte Dichtlippe.

Das erfindungsgemäße Wälzlager dient zur rotativen Lagerung bspw. einer Welle gegenüber einem Rahmen.

Das erfindungsgemäße Wälzlager umfasst bevorzugt zwei der erfindungsgemäßen Dichtungsanordnungen. Die Dichtungsanordnungen sind jeweils an einer von beiden axialen Seiten des Wälzlagers angeordnet, sodass sie den Lagerinnenraum axial beidseitig abdichten.

Bei einer bevorzugten Ausführungsform ist das Wälzlager durch ein Kugellager mit einer tiefen Laufrille gebildet. Ein solches Kugellager wird auch als "Deep Groove Ball Bearing" (DGBB) bezeichnet.

Das Wälzlager kann als Kugellager vorliegen und hierbei Bestandteil eines Tretlagers eines Elektrofahrrades sein.

Die Erfindung wird anhand der Zeichnung erläutert. Es zeigen:
- Fig. 1: eine perspektivische Schnittansicht einer bevorzugten Ausführungsform eines erfindungsgemäßen Wälzlagers;
- Fig. 2: ein Dichtungsring des in Fig. 1 gezeigten Wälzlagers;
- Fig. 3: das in Fig. 1 gezeigte Wälzlager in einer Nominalstellung;
- Fig. 4: das in Fig. 3 gezeigte Wälzlager in einer äußeren Verschiebestellung und
- Fig. 5: das in Fig. 3 gezeigte Wälzlager in einer inneren Verschiebestellung.

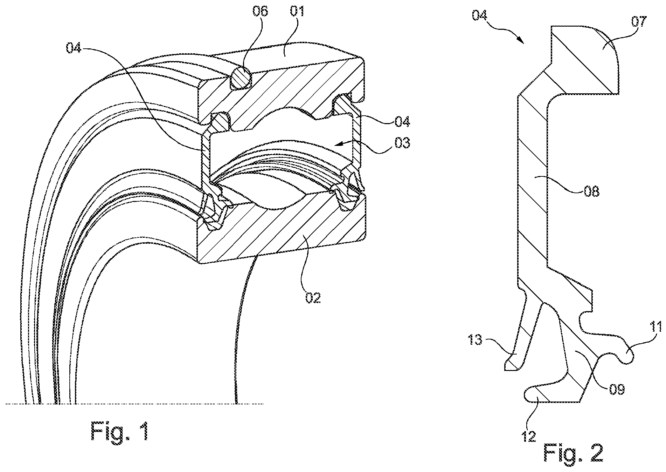

Fig. 1 zeigt eine perspektivische Schnittansicht einer bevorzugten Ausführungsform eines erfindungsgemäßen Wälzlagers. Das Wälzlager umfasst einen Außenring 01 und einen gegenüber dem Außenring 01 rotierbaren Innenring 02. Zwischen dem Außenring 01 und dem Innenring 02 ist ein Lagerinnenraum 03 ausgebildet, in welchem sich Kugeln als Wälzkörper (nicht gezeigt) befinden. Das Wälzlager umfasst weiterhin zwei Dichtungsringe 04, welche gegenüber dem Außenring 01 und dem Innenring 02 jeweils eine erfindungsgemäße Dichtungsanordnung ausbilden. Die beiden Dichtungsringe 04 dichten den Lagerinnenraum 03 axial beidseitig ab. Das Wälzlager umfasst zudem einen Gehäusedichtring 06 zum dichten Einbau des Wälzlagers in ein Gehäuse (nicht gezeigt).

Fig. 2 zeigt einen der beiden in Fig. 1 gezeigten Dichtungsringe 04 im Detail in einer Querschnittsansicht. Der Dichtungsring 04 besteht aus einem Elastomer und umfasst eine radial außen angeordnete umlaufende Klemmwulst 07 zur dichten Befestigung des Dichtungsringes 04 im Außenring 01 (gezeigt in Fig. 1). Der Dichtungsring 04 umfasst weiterhin einen Hauptabschnitt 08, welcher den axial seitlichen Lagerinnenraum 03 (gezeigt in Fig. 1) im Wesentlichen abschließt. Der Hauptabschnitt 08 weist die Form einer Kreisringscheibe auf. Die Klemmwulst 07 schließt sich umlaufend an den äußeren Umfang des Hauptabschnittes 08 an. Mit einem axial nach innen gerichteten Versatz schließt sich an einen inneren Umfang des kreisringscheibenförmigen Hauptabschnittes 08 ein umlaufender Dichtlippenträger 09 an. Der Dichtlippenträger 09 trägt eine erste umlaufende Dichtlippe 11 und eine zweite umlaufende Dichtlippe 12, welche axial nebeneinander angeordnet sind. Die erste Dichtlippe 11 ist in axialer Richtung zwischen der zweiten Dichtlippe 12 und dem Lagerinnenraum 03 (gezeigt in Fig. 1) angeordnet. Die erste Dichtlippe 11 ist im Wesentlichen radial nach innen gerichtet, während die zweite Dichtlippe 12 in der axialen Richtung nach außen gerichtet ist. Der Dichtungsring 04 umfasst weiterhin eine dritte umlaufende Dichtlippe 13, die an einem inneren Umfang des kreisringscheibenförmigen Hauptabschnitt 08 angeordnet ist und im Wesentlichen radial nach innen gerichtet ist.

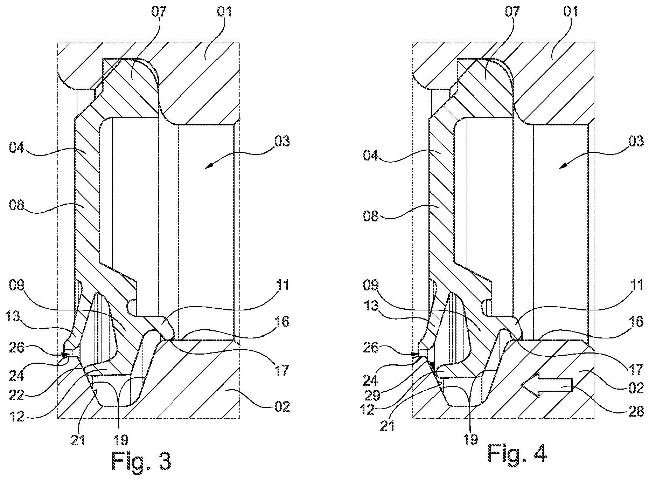

Fig. 3 zeigt das in Fig. 1 gezeigte Wälzlager in einer Nominalstellung, in welcher es frei von mechanischen Belastungen ist. Das Wälzlager ist insbesondere frei von axial wirkenden Kräften, sodass der Außenring 01 und der Innenring 02 in der axialen Richtung nicht zueinander verschoben sind. In dieser Nominalstellung liegt die erste Dichtlippe 11 an einem zylindermantelförmigen Oberflächenabschnitt 16 des Innenringes 02 an, sodass ein umlaufender Dichtkontakt 17 zwischen der ersten Dichtlippe 11 und dem zylindermantelförmigen Oberflächenabschnitt 16 ausgebildet ist. Der Innenring 02 weist eine umlaufende Nut 19 auf, in welche die zweite Dichtlippe 12 hineinragt. Die umlaufende Nut 19 weist einen trapezförmigen Querschnitt auf, sodass die Nut 19 an ihrer axial äußeren Seite einen kegelstumpfmantelförmigen Oberflächenabschnitt 21 des Innenringes 02 bildet. Die zweite Dichtlippe 12 ist in der Nominalstellung des Wälzlagers in der axialen Richtung an den kegelstumpfmantelförmigen Oberflächenabschnitt 21 des Innenringes 02 gepresst, sodass ein umlaufender Dichtkontakt 22 zwischen der zweiten Dichtlippe 12 und dem kegelstumpfmantelförmigen Oberflächenabschnitt 21 ausgebildet ist. Zwischen der dritten Dichtlippe 13 und einem umlaufenden Oberflächenabschnitt 24 des Innenringes 02 ist ein umlaufender Dichtspalt 26 ausgebildet.

Fig. 4 zeigt das in Fig. 3 gezeigte Wälzlager in einer äußeren Verschiebestellung. Die Ursache für diese äußere Verschiebestellung ist eine auf den Innenring 02 axial nach außen wirkende Kraft 28, sodass der Innenring 02 gegenüber dem Außenring 01 in der axialen Richtung geringfügig nach außen verschoben ist. Hierdurch ist der Innenring 02 auch gegenüber dem Dichtungsring 04 in der axialen Richtung geringfügig nach außen verschoben. Dies führt dazu, dass die zweite Dichtlippe 12 nicht mehr an den kegelstumpfmantelförmigen Oberflächenabschnitt 21 des Innenringes 02 gepresst ist, sodass ein umlaufender Dichtspalt 29 ausgebildet ist. Da die erste Dichtlippe 11 gegen den zylindermantelförmigen Oberflächenabschnitt 16 des Innenringes 02 gepresst ist, bleibt der umlaufende Dichtkontakt 17 aufgrund der Zylindermantelform des zylindermantelförmigen Oberflächenabschnittes 16 erhalten.

Auch der umlaufende Dichtspalt 26 zwischen der dritten Dichtlippe 13 und dem umlaufenden Oberflächenabschnitt 24 des Innenringes 02 bleibt erhalten.

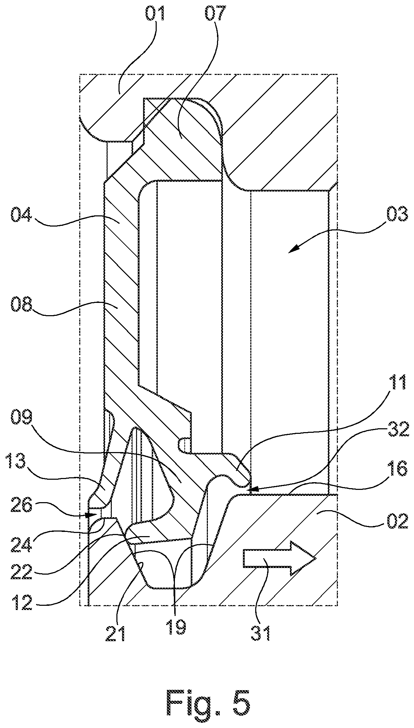

Fig. 5 zeigt das in Fig. 3 gezeigte Wälzlager in einer inneren Verschiebestellung. Die Ursache für diese innere Verschiebestellung ist eine auf den Innenring 02 axial nach innen wirkende Kraft 31, sodass der Innenring 02 gegenüber dem Außenring 01 in der axialen Richtung geringfügig nach innen verschoben ist. Hierdurch ist der Innenring 02 auch gegenüber dem Dichtungsring 04 in der axialen Richtung geringfügig nach innen verschoben. Dies führt dazu, dass die zweite Dichtlippe 12 noch stärker an den kegelstumpfmantelförmigen Oberflächenabschnitt 21 des Innenringes 02 gepresst wird, sodass der umlaufende Dichtkontakt 22 mit einer größeren Anpresskraft ausgebildet wird. Dies führt zudem zu einer Verschiebung des Dichtlippenträgers 09 gegenüber dem Hauptabschnitt 08 des Dichtungsringes 04 in der axialen Richtung nach innen, da der Dichtlippenträger 09 elastisch am Hauptabschnitt 08 aufgehängt ist. Diese Verschiebung des Dichtlippenträgers 09 führt gleichzeitig zu einer geringfügigen Drehung des Dichtlippenträgers 09 um eine in der tangentialen Richtung liegende Achse. Diese Drehung führt dazu, dass die erste Dichtlippe 11 nicht mehr gegen den zylindermantelförmigen Oberflächenabschnitt 16 des Innenringes 02 gepresst ist, sodass dort ein umlaufender Dichtspalt 32 ausgebildet ist. Der umlaufende Dichtspalt 26 zwischen der dritten Dichtlippe 13 und dem umlaufenden Oberflächenabschnitt 24 des Innenringes 02 bleibt erhalten.

### Bezugszahlenliste

- 01: Außenring
- 02: Innenring
- 03: Lagerinnenraum
- 04: Dichtungsring
- 05: -
- 06: Gehäusedichtring
- 07: Klemmwulst
- 08: Hauptabschnitt
- 09: Dichtlippenträger
- 10: -
- 11: erste Dichtlippe
- 12: zweite Dichtlippe
- 13: dritte Dichtlippe
- 14: -
- 15: -
- 16: zylindermantelförmiger Oberflächenabschnitt
- 17: umlaufender Dichtkontakt
- 18: -
- 19: umlaufende Nut
- 20: -
- 21: kegelstumpfmantelförmiger Oberflächenabschnitt
- 22: umlaufender Dichtkontakt
- 23: -
- 24: umlaufender Oberflächenabschnitt
- 25: -
- 26: umlaufender Dichtspalt
- 27: -
- 28: axial nach außen wirkende Kraft
- 29: umlaufender Dichtspalt
- 30: -
- 31: axial nach innen wirkende Kraft
- 32: umlaufender Dichtspalt

## Patentansprüche

1. Wälzlager zur Abdichtung eines Tretlagers für ein Elektrofahrrad, mit einem Außenring (01) und einem gegenüber diesem um eine Achse rotierbaren Innenring (02), wobei zwischen dem Außenring (01) und dem Innenring (02) ein Lagerinnenraum (03) mit hierin angeordneten Wälzkörpern ausgebildet ist, welcher Lagerinnenraum (03) durch eine Dichtungsanordnung abgedichtet ist, umfassend einen am Außenring (01) angebrachten Dichtungsring (04), welcher eine erste elastische Dichtlippe (11) und eine zweite elastische Dichtlippe (12) umfasst, wobei die erste Dichtlippe (11) in einer Nominalstellung der Dichtungsanordnung an einem zylindermantelförmigen Oberflächenabschnitt (16) des Innenrings (02) anliegt, wobei die zweite Dichtlippe (12) in der Nominalstellung der Dichtungsanordnung an einem sich zumindest teilweise in radialer Richtung erstreckenden umlaufenden Oberflächenabschnitt (21) des Innenrings (02) anliegt und wobei die zweite Dichtlippe (12) in axialer Richtung zwischen dem sich zumindest teilweise in der radialen Richtung erstreckenden umlaufenden Oberflächenabschnitt (21) des Innenrings (02) und dem zylindermantelförmigen Oberflächenabschnitt (16) des Innenrings (02) angeordnet ist, **dadurch gekennzeichnet, dass** der Dichtungsring (04) eine dritte Dichtlippe (13) umfasst, die in der axialen Richtung außen vor der zweiten Dichtlippe (12) angeordnet ist, wobei zwischen der dritten Dichtlippe (13) und einem umlaufenden Oberflächenabschnitt (24) des Innenrings (02) ein Dichtspalt (26) ausgebildet ist und an einem Hauptabschnitt (08) des Dichtungsrings (04) die dritte Dichtlippe (13) angeschlossen und am inneren Umfang des Hauptabschnitts (08) ein umlaufender Dichtlippenträger (09) elastisch angeschlossen ist, der die erste Dichtlippe (11) und die zweite Dichtlippe (12) trägt.

2. Wälzlager nach Anspruch 1, **dadurch gekennzeichnet, dass** der Außenring (01) und der Innenring (02) in der Nominalstellung jeweils eine axiale Position aufweisen, wobei der Innenring (02) gegenüber dem Außenring (01) in einer äußeren Verschiebestellung aufgrund einer in der axialen Richtung nach außen wirkenden Kraft in der axialen Richtung nach außen verschoben ist, wobei der Innenring (02) gegenüber dem Außenring (01) in einer inneren Verschiebestellung aufgrund einer in der axialen Richtung nach innen wirkenden Kraft in der axialen Richtung nach innen verschoben ist,
- wobei in der äußeren Verschiebestellung die erste Dichtlippe (11) an dem zylindermantelförmigen Oberflächenabschnitt (16) des Innenrings (02) anliegt und zwischen der zweiten Dichtlippe (12) und dem sich zumindest teilweise in der radialen Richtung erstreckenden umlaufenden Oberflächenabschnitt (32) des Innenrings (02) ein Dichtspalt (29) ausgebildet ist; und
- wobei in der inneren Verschiebestellung die zweite Dichtlippe (12) mit einer erhöhten Presskraft an dem sich zumindest teilweise in die radiale Richtung erstreckenden umlaufenden Oberflächenabschnitt (21) des Innenrings (02) anliegt, wodurch der Dichtungsring (04) verformt ist und die erste Dichtlippe (11) in der radialen Richtung verschoben ist und wodurch zwischen der ersten Dichtlippe (11) und dem zylindermantelförmigen Oberflächenabschnitt (16) des Innenrings (02) ein Dichtspalt (32) ausgebildet ist.

3. Wälzlager nach einem der Ansprüche 1 bis 2, **dadurch gekennzeichnet, dass** der sich zumindest teilweise in der radialen Richtung erstreckende umlaufende Oberflächenabschnitt (21) des Innenrings (02) die Form eines Kegelstumpfmantels besitzt.

4. Wälzlager nach Anspruch 3, **dadurch gekennzeichnet, dass** der kegelstumpfmantelförmige Oberflächenabschnitt (21) des Innenrings (02) durch eine umlaufende Seitenfläche einer im Innenring (02) ausgebildeten umlaufenden Nut (19) gebildet ist.

5. Wälzlager nach Anspruch 4, **dadurch gekennzeichnet, dass** die zweite Dichtlippe (12) in der umlaufenden Nut (19) angeordnet ist.

6. Wälzlager nach Anspruch 1, **dadurch gekennzeichnet, dass** das Wälzlager zwei der Dichtungsanordnungen umfasst, welche auf dessen beiden axialen Seiten angeordnet sind.

7. Wälzlager nach Anspruch 1 oder 7, **dadurch gekennzeichnet, dass** das Wälzlager durch ein Kugellager mit einer tiefen Laufrille gebildet ist.

## Claims

1. A rolling bearing for sealing a bottom bracket for an electric bicycle, having with an outer ring (01) and an inner ring (02) rotatable relative thereto about an axis, wherein a bearing interior (03) with rolling elements arranged therein is formed between the outer ring (01) and the inner ring (02), which bearing interior (03) is sealed by a sealing arrangement, comprising a sealing ring (04) attached to the outer ring (01), which comprises a first elastic sealing lip (11) and a second elastic sealing lip (12), wherein the first sealing lip (11) in a nominal position of the sealing arrangement rests on a cylinder jacket-shaped surface section (16) of the inner ring (02), wherein the second sealing lip (12) in the nominal position of the sealing arrangement rests on a circumferential surface section (21) of the inner ring (02) extending at least partially in the radial direction and wherein the second sealing lip (12) is arranged in the axial direction between the circumferential surface section (21) of the inner ring (02) which extends at least partially in the radial direction and the cylinder jacket-shaped surface section (16) of the inner ring (02), **characterized in that** the sealing ring (04) comprises a third sealing lip (13) which is arranged in the axial direction outside of the second sealing lip (12), wherein between the third sealing lip (13) and a circumferential surface section (24) of the inner ring (02) a sealing gap (26) is formed and the third sealing lip (13) is connected to a main section (08) of the sealing ring (04) and a circumferential sealing lip support (09) is elastically connected to the inner circumference of the main section (08), which bears the first sealing lip (11) and the second sealing lip (12).

2. The rolling bearing according to claim 1, **characterized in that** the outer ring (01) and the inner ring (02) each have an axial position in the nominal position, wherein the inner ring (02) is displaced outwards in the axial direction relative to the outer ring (01) in an outer displacement position due to a force acting outwards in the axial direction, wherein the inner ring (02) is displaced inwards in the axial direction relative to the outer ring (01) in an inner displacement position due to a force acting inwards in the axial direction,
- wherein, in the outer displacement position, the first sealing lip (11) rests on the cylinder jacket-shaped surface section (16) of the inner ring (02) and a sealing gap (29) is formed between the second sealing lip (12) and the circumferential surface section (32) of the inner ring (02) extending at least partially in the radial direction; and
- wherein, in the inner displacement position, the second sealing lip (12) rests with an increased pressing force on the circumferential surface section (21) of the inner ring (02) extending at least partially in the radial direction, whereby the sealing ring (04) is deformed and the first sealing lip (11) is displaced in the radial direction and whereby a sealing gap (32) is formed between the first sealing lip (11) and the cylinder jacket-shaped surface section (16) of the inner ring (02).

3. The rolling bearing according to one of claims 1 to 2, **characterized in that** the circumferential surface section (21) of the inner ring (02), which extends at least partially in the radial direction, has the shape of a truncated cone jacket.

4. The rolling bearing according to claim 3, **characterized in that** the truncated cone jacket-shaped surface section (21) of the inner ring (02) is formed by a circumferential side surface of a circumferential groove (19) formed in the inner ring (02).

5. The rolling bearing according to claim 4, **characterized in that** the second sealing lip (12) is arranged in the circumferential groove (19).

6. The rolling bearing according to claim 1, **characterized in that** the rolling bearing comprises two of the sealing arrangements, which are arranged on its two axial sides.

7. The rolling bearing according to claim 1 or 7, **characterized in that** the rolling bearing is formed by a ball bearing with a deep groove.

## Revendications

1. Palier à roulement permettant de sceller un boîtier de pédalier pour un vélo électrique, comportant une bague extérieure (01) et une bague intérieure (02) pouvant tourner autour d'un axe par rapport à la bague extérieure, un espace intérieur de roulement (03) dans lequel sont agencés des corps de roulement étant formé entre la bague extérieure (01) et la bague intérieure (02), lequel espace intérieur de roulement (03) est scellé par un système d'étanchéité, comprenant une bague d'étanchéité (04) fixée à la bague extérieure (01), laquelle bague d'étanchéité comprend une première lèvre d'étanchéité (11) élastique et une deuxième lèvre d'étanchéité (12) élastique, la première lèvre d'étanchéité (11), dans une position nominale du système d'étanchéité, reposant sur une section de surface (16) en forme d'enveloppe cylindrique de la bague intérieure (02), la deuxième lèvre d'étanchéité lèvre (12) dans la position nominale du système d'étanchéité reposant sur une section de surface (21) circonférentielle de la bague intérieure (02) qui s'étend au moins partiellement dans la direction radiale et la deuxième lèvre d'étanchéité (12) étant agencée dans la direction axiale entre la section de surface (21) circonférentielle de la bague intérieure (02) qui s'étend au moins partiellement dans la direction radiale et la section de surface (16) en forme d'enveloppe cylindrique de la bague intérieure (02), **caractérisé en ce que** la bague d'étanchéité (04) comprend une troisième lèvre d'étanchéité (13) qui est agencée dans la direction axiale à l'extérieur devant la deuxième lèvre d'étanchéité (12), entre la troisième lèvre d'étanchéité (13) et une section de surface (24) circonférentielle de la bague intérieure (02), un espace d'étanchéité (26) étant formé et la troisième lèvre d'étanchéité (13) étant reliée à une section principale (08) de la bague d'étanchéité (04) et un support de lèvre d'étanchéité (09) circonférentiel étant élastiquement relié à la circonférence intérieure de la section principale (08), le support portant la première lèvre d'étanchéité (11) et la deuxième lèvre d'étanchéité (12).

2. Palier à roulement selon la revendication 1, **caractérisé en ce que** la bague extérieure (01) et la bague intérieure (02) présentent chacune une position axiale dans la position nominale, la bague intérieure (02) étant déplacée vers l'extérieur dans la direction axiale dans une position de déplacement extérieure par rapport à la bague extérieure (01) en raison d'une force agissant vers l'extérieur dans la direction axiale, la bague intérieure (02) étant déplacée vers l'intérieur dans la direction axiale par rapport à la bague extérieure (01) dans une position de déplacement intérieure en raison d'une force agissant vers l'intérieur dans la direction axiale,
- dans la position de déplacement extérieure, la première lèvre d'étanchéité (11) reposant sur la section de surface (16) en forme d'enveloppe cylindrique de la bague intérieure (02) et un espace d'étanchéité (29) étant formé entre la deuxième lèvre d'étanchéité (12) et la section de surface (32) circonférentielle de la bague intérieure (02), qui s'étend au moins partiellement dans la direction radiale ; et
- dans la position de déplacement intérieure, la deuxième lèvre d'étanchéité (12) reposant avec une force de pression accrue sur la section de surface (21) circonférentielle de la bague intérieure (02), qui s'étend au moins partiellement dans la direction radiale, moyennant quoi la bague d'étanchéité (04) est déformée et la première lèvre d'étanchéité (11) est déplacée dans la direction radiale et moyennant quoi un espace d'étanchéité (32) est formé entre la première lèvre d'étanchéité (11) et la section de surface (16) en forme d'enveloppe cylindrique de la bague intérieure (02).

3. Palier à roulement selon l'une quelconque des revendications 1 à 2, **caractérisé en ce que** la section de surface (21) circonférentielle de la bague intérieure (02), qui s'étend au moins partiellement dans la direction radiale, possède la forme d'une enveloppe tronconique.

4. Palier à roulement selon la revendication 3, **caractérisé en ce que** la section de surface (21) en forme d'enveloppe tronconique de la bague intérieure (02) est formée par une surface latérale circonférentielle d'une rainure (19) circonférentielle formée dans la bague intérieure (02).

5. Palier à roulement selon la revendication 4, **caractérisé en ce que** la deuxième lèvre d'étanchéité (12) est agencée dans la rainure (19) circonférentielle.

6. Palier à roulement selon la revendication 1, **caractérisé en ce que** le palier à roulement comprend deux des systèmes d'étanchéité qui sont agencés sur ses deux côtés axiaux.

7. Palier à roulement selon la revendication 1 ou 7, **caractérisé en ce que** le palier à roulement est formé par un roulement à billes avec une rainure de roulement profonde.
